# EUROPEAN PATENT SPECIFICATION

(11) **EP 0 431 460 B1**
(45) Date of publication and mention of the grant of the patent: **03.02.1993**
(21) Application number: 90122768.6
(22) Date of filing: 28.11.1990
(51) Int. Cl.: E03F 1/00

(54) **Vacuum pump control apparatus for an evacuating type waste water collecting system**
Vorrichtung zum Kontrollieren einer Vakuumpumpe für ein Abwassersammel- und -evakuiersystem
Appareil pour contrôler une pompe à vide destinée à un système de collection et d'évacuation des eaux usées

(30) Priority: 30.11.1989 JP 313236/89
(43) Date of publication of application: 12.06.1991
(73) Proprietor: EBARA CORPORATION, Ohta-ku, Tokyo (JP)
(72) Inventor: Ushitora, Akihiro, Yokohama-shi, Kanagawa-ken (JP); Yamaguchi, Kazuo, Tokyo (JP); Asanagi, Tsuneo, Kawasaki-shi, Kanagawa-ken (JP)
(74) Representative: Wagner, Karl H., Dipl.-Ing.

(56) References cited:
- DE-A- 2 637 962
- DE-C- 3 414 292
- GB-A- 1 143 624
- GB-A- 1 288 781

## Description

The present invention relates to a vacuum pump control apparatus for an evacuating type waste water collecting system for collecting the waste water discharged from a number of houses. Such an apparatus is described in the preamble of claim 1 and is known from DE-A-2 637 962.

An evacuating type waste water collecting system has been known as one of the systems for collecting waste water discharged from a number of houses.

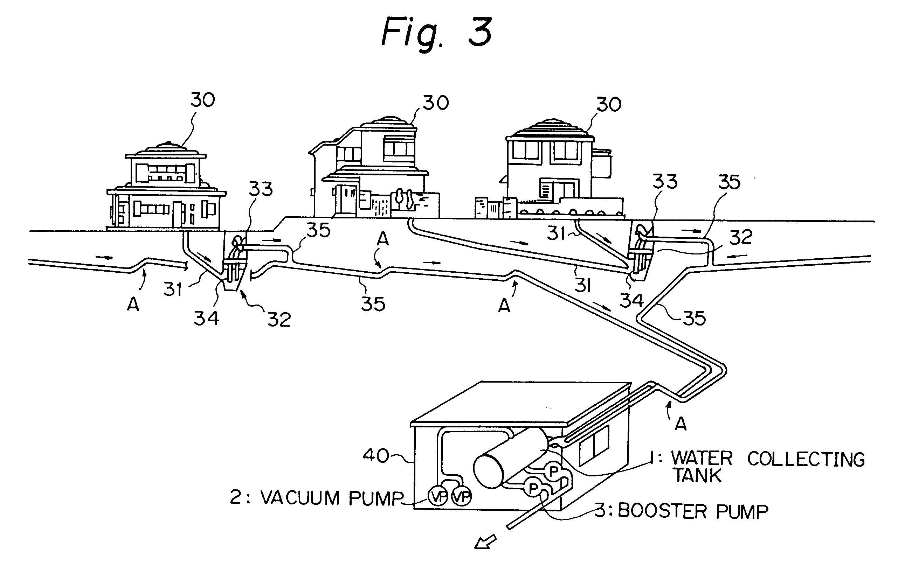

Fig. 3 shows the overall structure of such an evacuating type waste water collecting system.

As shown in the figure, the waste water having been discharged from each of the houses 30 (located on the ground surface) flows into an underground cesspool 32 through sewer pipes 31 of the type utilizing a natural downflow. When a predetermined amount of waste water has collected at the lower portion of the cesspool 32, a vacuum operated valve 33 attached at the upper portion within the cesspool 32 is opened so that the waste water in the cesspool 32 is sucked through a suction pipe 34 together with air which amounts to several times the volume of the waste water.

This waste water is then sucked via the vacuum operated valve 33 into vacuum sewer pipes 35 which are distributed beneath the surface and is collected in a water collecting tank 1 at the vacuum pump site 40.

Waste water collected in the water collecting tank 1 is then sent to a sewage treatment plant or the like by means of a booster pump 3.

To generate a negative pressure at the interior of the water collecting tank 1 and at the interior of the vacuum sewer pipes 35, a vacuum pump 2 is attached to the water collecting tank 1.

Driving of the vacuum pump 2 and the booster pump 3 has conventionally been controlled by the gas pressure and the liquid level of the waste water in the water collecting tank 1 respectively.

In other words, the vacuum pump 2 is controlled to start when the gas pressure in the water collecting tank has risen above a set value (i.e., toward atmospheric pressure) and to stop when the pressure is less than another set value. Booster pump 3 on the other hand is controlled in such a manner that it is started when the liquid level of waste water within the water collecting tank 1 has risen above a set value while it is stopped for values less than another set value.

In this type of system, generally, a two-phase flow consisting of gas and liquid occurs within the vacuum sewer pipe 35 and waste water, drawn by the force with which said gas is sucked toward the water collecting tank 1, is also carried to the water collecting tank 1. Thus, it is not possible for a specific portion of the vacuum sewer pipe 35 to be filled only with waste water.

For some unspecified reason, however, a portion of the vacuum sewer pipe 35 with an upgrade toward the vacuum pump site 40 (like portion "A" in Fig. 3) may be filled with waste water, causing a so-called air lock. In such a case, the negative pressure generated at the water collecting tank 1 is significantly reduced at the distal ends of the pipe passage of the vacuum sewer pipes 35 (i.e., the air pressure is raised).

When the negative pressure within the pipe is reduced in this way, the amount of air sucked from the vacuum operated valve 33 is reduced and gas-liquid ratio in the vacuum sewer pipe (the amount of air to the amount of the waste water) becomes smaller. In addition, since the volume of the air in the pipe becomes smaller, air locks are caused more easily, thereby resulting in a "vicious cycle" such that the negative pressure is even more reduced at the distal ends of the pipe passage.

The present invention has been achieved in view of the problems as described above, and its object is to provide a vacuum pump control apparatus for an evacuating type waste water collecting system which controls the operating time of a vacuum pump so that a high gas-liquid ratio within the vacuum sewer pipes is recovered when it falls below a predetermined value.

To solve the problems as described above, the present invention comprises a vacuum pump control apparatus having gas-liquid ratio detection means for detecting the ratio of the amount of air to the amount of waste water being collected in a water collecting tank of an evacuating type waste water collecting system and control means for controlling the operating time of the vacuum pump based on the gas-liquid ratio detected by said gas-liquid ratio detection means so that a target value of said gas-liquid ratio is recovered when it falls below the target value.

The following means may for example be employed as the gas-liquid ratio detection means.
(1) Measuring the cumulative operation time of the vacuum pump during a time duration with which the waste water level in the water collecting tank reaches from a known level to another known level, the gas-liquid ratio is determined on the basis of the total displacement of the vacuum pump which has been obtained from the cumulative operation time and the capacity of the vacuum pump and also on the basis of the amount of waste water in the tank from the first known level to the second known level.
(2) A gas-liquid ratio is determined on the basis of the total displacement of the vacuum pump which has been obtained from the cumulative operation time during a certain time period and the capacity of the vacuum pump and also on the basis of the total pumped out amount of the waste water which has been obtained from the cumulative operation time within said certain time period and the pumping out capacity of the booster pump.

Further, as the above-described control means, the vacuum pump is controlled to be operated for a predetermined period whenever the gas-liquid ratio detected by said gas-liquid ratio detection means falls below the target value. This operation of the vacuum pump is effected in addition to the normal operation of the same.

By arranging a vacuum pump controlling apparatus of an evacuating type waste water collecting system in a manner as described above, the vacuum pump operating time is controlled by said controlling means to be longer than its normal operating time when it is detected by the gas-liquid ratio detection means that the gas-liquid ratio has fallen below the target value. Air pressure in the water collecting tank thus becomes lower than that in the normal operation.

Therefore, the air pressure in the vacuum sewer pipe correspondingly becomes less. As a result, the amount of air sucked from the vacuum operated valve is increased, making the overall gas-liquid ratio higher. Furthermore, since the air pressure in the pipes becomes less, the air is significantly expanded to remove the air lock.

The above and other objects, features and advantages of the present invention will become more apparent from the following description when taken in conjunction with the accompanying drawings in which a preferred embodiment of the present invention is shown by way of illustrative examples.
Fig. 1 is a diagram showing an example of circuit arrangement of a vacuum pump control apparatus according to the present invention;
Fig. 2 is a view showing a water collecting tank 1, a vacuum pump 2 and a booster pump 3 in their connected state to which the present invention may be applied; and
Fig. 3 is a view showing the overall structure of a conventional evacuating type waste water collecting system.

An embodiment of the present invention will now be described in detail with reference to the drawings.

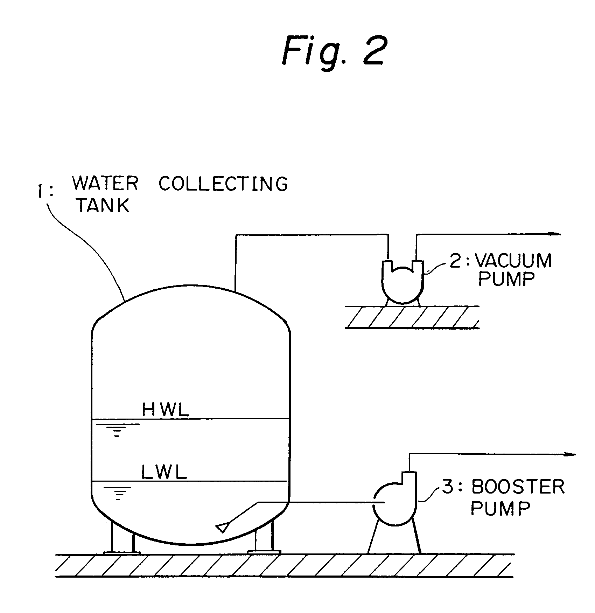

Fig. 2 is a view illustrating a water collecting tank 1, a vacuum pump 2 and a booster pump 3 in their connected state to which the present invention may be applied.

As shown in this figure, the vacuum pump 2 and the booster pump 3 are connected to the upper portion and to the lower portion of the water collecting tank 1, respectively. Air in the water collecting tank is evacuated when the vacuum pump 2 is driven, while the waste water in the water collecting tank is removed when driving the booster pump 3.

Vacuum pump 2 suitably employed in this embodiment is of the type which starts when the air pressure in the water collecting tank exceeds -5000 Pa (-5.0 mAq) (the atmospheric pressure is the reference) and stops when it falls below -7.0 mAq.

This vacuum pump 2 is to be controlled by the vacuum pump control apparatus according to the present invention of which the controlling method will be described hereinafter.

Booster pump 3 is controlled to repeat a process that is started when the liquid level of the waste water in the collecting tank 1 reaches HWL (high water level) while it is stopped at LWL (low water level).

Vacuum pump 2 on the other hand is started whenever the air pressure in the water collecting tank 1 exceeds -5.0 mAq.

Since the air lock problem does not occur when the gas-liquid ratio is large (i.e., when the amount of air is large relative to the amount of waste water), the vacuum pump 2 is stopped in a similar manner as a conventional vacuum pump 2 when the air pressure in the water collecting tank 1 falls below -7.0 mAq.

On the other hand, when the gas-liquid ratio is small (i.e., when the amount of the air is small relative to the amount of the waste water), the vacuum pump 2 is forced to operate before being stopped, irrespective of whether or not the air pressure in the water collecting tank 1 has fallen below -7 mAq, for a reference time t₂ starting from the point at which the waste water level has reached LWL as will be explained more detail hereinafter.

Such a reference time t₂ is an operating time of the vacuum pump 2 which is necessary for evacuating the amount of air to be evacuated for the total amount of waste water to be accumulated from LWL to HWL in the water collecting tank 1 (i.e., the amount of air for achieving an ideal gas-liquid ratio).

Because of this reason, the air pressure in the water collecting tank 1 may be reduced beyond -7.0 mAq.

In such a case, the air pressure within the vacuum waste water pipe 35 as shown in Fig. 3 is accordingly reduced, the apparent gas-liquid ratio within the vacuum waste water pipe 35 becomes larger and the problem of the air lock mentioned above will be removed. Therefore, a lower air pressure reaches the location of the vacuum valve 33, whereby more air may be sucked and a higher overall gas-liquid ratio achieved. By repeating such an operation, an ideal gas-liquid ratio may be closely attained.

It should be noted that another case where the vacuum pump 2 is caused to stop is when the liquid level of the waste water in the water collecting tank 1 reaches HWL.

This is to prevent the waste water from flowing into the vacuum pump 2 from the upper portion of the water collecting tank 1 due to an unusually elevated liquid level of the waste water in the water collecting tank 1.

The gas-liquid ratio as described above may be obtained from the amount of waste water collected in the water collecting tank 1 (the amount of waste water sucked from all the vacuum operated valves 33) and from the air amount (the air amount sucked from all the vacuum operated valves 33). In practice, the volume of the air and the volume of the waste water are obtained by the following methods.

### (1) Air Amount

It is possible to assume that the displacement of the vacuum pump 2 be substantially constant for a unit time. An approximated air amount evacuated from the water collecting tank 1 may therefore be obtained by calculating the cumulative operating time of the vacuum pump 2 within a certain time period.

### (2) Waste Water Amount

The amount of waste water from the water level LWL to the water level HWL in the water collecting tank 1 is previously known.

In this embodiment, a cumulative operating time t₁ is accumulated as the operating time of the vacuum pump 2 during a time duration with which the waste water within the water collecting tank 1 is increased from LWL to HWL. Based on this result, the air amount in relation to the amount of the waste water is calculated to obtain the gas-liquid ratio.

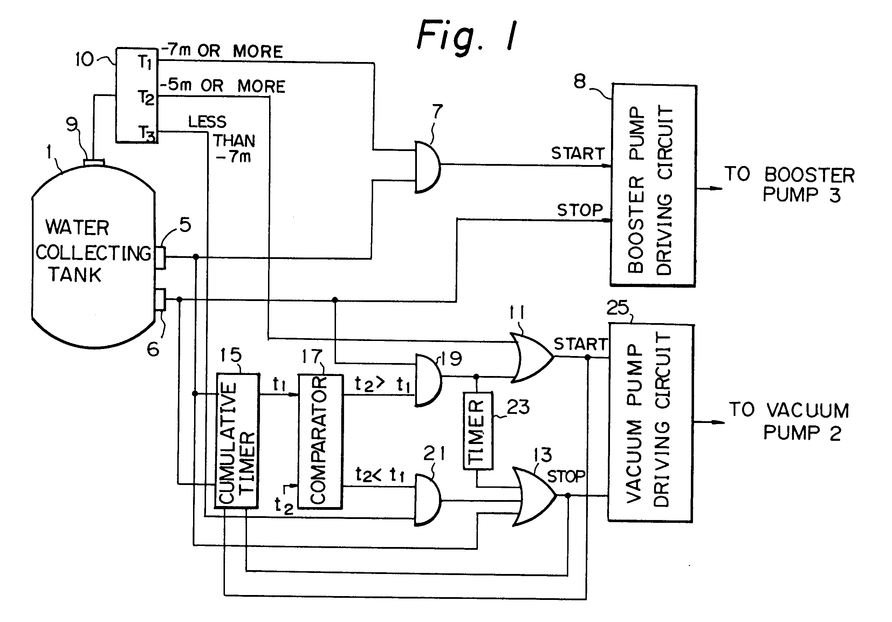

Fig. 1 is a diagram showing an example of a circuit arrangement for implementing the above-described control method.

Included in this figure are: a HWL (high water level) sensor 5 for detecting a HWL of the waste water level within the tank 1; a LWL (low water level) sensor 6 for detecting LWL; and AND circuit 7; a booster pump driving circuit 8; a pressure sensor 9 for sensing the air pressure within the water collecting tank 1; a processing circuit 10 which provides an output from an output terminal T₁ when the air pressure within the water collecting tank 1 has risen above -7.0 mAq, provides an output from an output terminal T₂ when it has risen above -0.5 mAq, and provides an output from an output terminal T₃ when it has fallen below -7.0 mAq; OR circuits 11, 13; AND circuits 19, 21; a cumulative timer 15 for measuring and outputting a cumulative operating time t₁ of the vacuum pump 2 during the time with which the waste water in the water collecting tank 1 is increased from LWL to HWL; a comparator 17 which compares the cumulative operating time t₁ with the reference time t₂ so as to provide an output to the AND circuit 19 when t₂ > t₁ and provide an output to the AND circuit 21 when t₂ > t₁; a timer 23 which is arranged to provide an output to the OR circuit 13 just after an elapse of the reference time t₂ from the time at which an output signal from the AND circuit 19 has been entered; and a vacuum pump driving circuit 25.

First, as shown in this figure, when waste water flows into the water collecting tank 1 and its liquid level reaches HWL, a signal from the HWL sensor 5 is fed into the AND circuit 7. If the air pressure in the water collecting tank 1 is above -7.0 mAq (output from the output terminal T₁ of the processing circuit 10) at this time, a signal is provided from the AND circuit 7 to the booster pump driving circuit 8 so as to drive the booster pump 3.

Next, when the liquid level of the waste water in the water collecting tank 1 is reduced from HWL to LWL because of the operation of the booster pump 3, a signal from the LWL sensor 6 is fed into the booster pump driving circuit 8 so as to stop the booster pump 3. By so doing, the liquid level of the waste water within the water collecting tank 1 is raised again to HWL and similar operations are thereafter repeated.

Operation of the vacuum pump 2 will now be described according to each of the possible cases.

First, when the air pressure in the water collecting tank 1 has exceeded -5.0 mAq, the output from the output terminal T₂ of the processing circuit 10 is fed into the OR circuit 11 so as to start the vacuum pump 2.

Next, in a case where the cumulative operating time t₁ of the vacuum pump 2 measured by the cumulative timer 15 is compared with the reference time t₂ in the comparator 17 and t₂ < t₁ is obtained (i.e., where the gas-liquid ratio is relatively large), an output is provided from the AND circuit 21 to stop the vacuum pump 2 when the air pressure in the water collecting tank 1 has fallen below -7.0 (output from the output terminal T₃ of the processing circuit 10).

On the other hand, in a case where the cumulative operating time t₁ of the vacuum pump 2 is determined as t₂ > t₁ (i.e. , where the gas-liquid ratio is relatively small), the vacuum pump is started by the AND circuit 19 when the liquid level of the waste water in the water collecting tank 1 has fallen to LWL (output from the LWL sensor 6), and the vacuum pump 2 is to be stopped by the OR circuit 13 just after the reference time t₂ has elapsed by the timer 23. In this case, it should be noted that once the liquid level of waste water in the tank 1 rises to HWL, and the booster pump 3 is driven by the signal from the AND circuit 7 causing the liquid level to fall the LWL. Also, once the vacuum pump 2 is started by the AND circuit 19, the operation of the vacuum pump 2 is continued by the reference time t₂ to increase the gas-liquid ratio irrespective of whether or not the air pressure in the water collecting tank 1 is below -7.0 mAq.

Furthermore, as stated above, to prevent the waste water from flowing into the vacuum pump 2, when the liquid level of the waste water in the water collecting tank 1 has reached HWL, the output of the HWL sensor 5 is fed into the OR circuit 13 so as to stop the vacuum pump 2.

It should be noted that the normal starting pressure, -5.0 mAq, of the vacuum pump 2 in the above-described embodiment is set higher than the conventional value, -6.0 mAq or -5.5 mAq. This intends that, by accepting the rise of air pressure in the water collecting tank 1 up to -5.0 mAq as far as the predetermined gas-liquid ratio is favorably maintained, the number operations of the vacuum pump 2 is reduced to save the amount of water.

While a specific embodiment of the vacuum pump control apparatus for an evacuating type waste water collecting system according to the present invention has been described in detail, the present invention is not limited to this and various modifications such as those setout below are possible.
(1) In the above-described embodiment, the operating mode of the vacuum pump 2 is controlled by calculating the gas-liquid ratio from the cumulative operating time and evacuating capacity of the vacuum pump 2 during the time within which a certain amount of waste water flows into the water collecting tank 1. The present invention is not limited to this. For example, the amount of air may be calculated from a cumulative operating time within a predetermined time period and an evacuating capacity of the vacuum pump 2 and at the same time, the amount of waste water is calculated from the cumulative operating time within said predetermined time period and the pumping out capacity of the booster pump 3. A gas-liquid ratio may be calculated from these air and waste water amounts and the vacuum pump 2 is caused to be operated to increase said gas-liquid ratio when it falls below the target value.
(2) In the above-described embodiment, the evacuating capacity of the vacuum pump 2 is considered to be constant regardless of suction pressure (i.e., air pressure in the water collecting tank 1). Displacement of the vacuum pump 2 was thus calculated only from its operating time. Strictly speaking, however, the evacuating capacity of the vacuum pump 2 is changed according to the suction pressure. Displacement of the vacuum pump 2 is thus obtained with respect to the suction pressure of each unit time, which is then integrated to accurately obtain the total displacement for a predetermined time interval. Vacuum pump 2 may be controlled on the basis of this result.

As has been described in detail, a vacuum pump control apparatus of an evacuating type waste water collecting system according to the present invention is controlled such that the vacuum pump is operated for a predetermined period whenever the gas-liquid ratio has fallen below the target value. Thus the air pressure in the water collecting tank becomes lower than that under the normal condition, and the air pressure in the vacuum sewer pipes becomes correspondingly lower. As a result, the amount of air sucked from the vacuum operated valve is increased and there is therefore an excellent advantage that the overall gas-liquid ratio is improved to an ideal value.

## Claims

1. A vacuum pump control apparatus for an evacuating type waste water collecting system in which waste water discharged from houses and facilities (30) is collected into a water collecting tank (1) by means of vacuum sewer pipes (35) provided with a negative pressure therein and in which the waste water collected in said water collecting tank (1) is discharged by means of a booster pump (3) while the air in said water collecting tank (1) is discharged by means of a vacuum pump (2) characterised in that,
said vacuum pump control apparatus comprises:
gas-liquid ratio detection means for detecting the ratio of the amount of air to the amount of waste water to be collected into said water collecting tank; and
control means for controlling the operating time of said vacuum pump based on the gas-liquid ratio detected by said gas-liquid ratio detecting means so that a target value of said gas-liquid ratio is recovered when it falls below the target value.

2. A vacuum pump control apparatus according to Claim 1 wherein said gas-liquid ratio detection means measures cumulative operating time of the vacuum pump during the time duration with which the waste water level in the waste water tank rises from a predetermined level to another predetermined level, and determines the gas-liquid ratio on the basis of the total displacement of said vacuum pump obtained from the cumulative operating time and the evacuating capacity of said vacuum pump and on the basis of the amount of waste water in said waste water tank from the first predetermined level and to the second predetermined level.

3. A vacuum pump control apparatus according to Claim 1 wherein said gas-liquid ratio detection means determines the gas-liquid ratio both on the basis of the total displacement of said vacuum pump obtained from the cumulative operating time within a certain time period and the evacuating capacity of the vacuum pump and on the basis of the total pumped out amount obtained from the cumulative operating time within said certain time period and the pumping out capacity of the booster pump.

4. A vacuum pump control apparatus according to Claim 2 wherein said gas-liquid ratio detection means includes a cumulatiave timer for measuring a cumulative operation time of said vacuum pump.

5. A vacuum pump control apparatus according to Claim 4 wherein said control means includes a comparator for comparing said cumulative operation time of said vacuum pump with a reference time and outputs a signal to start operation of said vacuum pump when said cumulative operation time is less than said reference time.

6. A vacuum pump control apparatus according to Claim 5 wherein said control means includes a timer for limiting duration of operation of said vacuum pump to a predetermined value.

7. A vacuum pump control apparatus according to Claim 3 wherein said gas-liquid ratio detection means includes a cumulative timer for measuring a cumulative operation time of said vacuum pump.

8. A vacuum pump control apparatus according to Claim 7 wherein said control means includes a comparator for comparing said cumulative operation time of said vacuum pump with a reference time and outputs a signal to start operation of said vacuum pump when said cumulative operation time is less than said reference time.

9. A vacuum pump control apparatus according to Claim 8 wherein said control means includes a timer for limiting duration of operation of said vacuum pump to a predetermined value.

10. A vacuum pump control apparatus according to Claim 6, further comprising a low water level sensor and a high water level sensor provided on said water collecting tank for detecting said predetermined level and another predetermined level of said waste water in said water collecting tank respectively and providing them to said control means, said control means operates to stop said vacuum pump when said another predetermined level is detected by said high water level sensor.

11. A vacuum pump control apparatus according to Claim 10, further comprising a pressure sensor for sensing the air pressure within said water collecting tank, a processing circuit connected to said pressure sensor and outputs a signal to said control means when the pressure within said water collecting tank has risen above a first predetermined value to thereby start the operation of said vacuum pump.

12. A vacuum pump control apparatus according to Claim 11, wherein said first predetermined value is -5000 Pa (-5 mAq).

13. A vacuum pump control apparatus according to Claim 11 wherein said processing circuit outputs a signal to said control means when the pressure within said water collecting tank has fallen below second predetermined value which is lower than said first predetermined value, said control means operates to stop said vacuum pump when the pressure within said water collecting tank has fallen below said second predetermined value and when said cumulative operation time of said vacuum pump is longer than said reference time.

14. A vacuum pump control apparatus according to Claim 13 wherein said second predetermined value is -7000 Pa (-7 mAq).

## Patentansprüche

1. Eine Vakuumpumpensteuervorrichtung für ein Abwassersammelsystem der evakuierenden Bauart, bei dem Abwasser abgegeben von Häusern und Anlagen (30) in einem Wassersammeltank (1) gesammelt wird mittels Vakuumabwasserrohren (35) die mit einem negativen Druck darinnen versehenen sind, und wobei das Abwasser, das in dem Sammelband (1) gesammelt ist, abgegeben wird mittels einer Druckerhöhungs- oder Booster-Pumpe (13), während die Luft in dem Wassersammeltank (1) abgegeben wird mittels einer Vakuumpumpe (2), dadurch gekennzeichnet, daß die Vakuumpumpensteuervorrichtung folgendes aufweist:
Gas-Flüssigkeits-Verhältnis-Detektiermittel zum Detektieren des Verhältnisses der Luftmenge zur Menge des Abwassers, das in dem Wassersammeltank gesammelt werden soll; und
Steuermittel zum Steuern der Betriebszeit der Vakuumpumpe und zwar basierend auf dem Gas-Flüssigkeits-Verhältnis, welches detektiert wurde durch die Gas-Flüssigkeits-Verhältnis-Detektiermittel, so daß ein Zielwert des Gas-Flüssigkeits-Verhältnisses wiedergewonnen werden kann, wenn dieser unterhalb des Zielwertes fällt.

2. Vakuumpumpensteuervorrichtung gemäß Anspruch 1, wobei die Gas-Flüssigkeits-Verhältnis-Detektiermittel die kumulative Betriebszeit der Vakuumpumpe messen, während der Zeitdauer, in der sich der Abwasserpegel in dem Abwassertank von einem vorbestimmten Pegel zu einem anderen vorbestimmten Pegel erhöht, und wobei sie das Gas-Flüssigkeits-Verhältnis bestimmen auf der Basis der Gesamtverdrängung, der Vakuumpumpe, erhalten aus der kumulativen Betriebszeit und der Evakuierungskapazität der Vakuumpumpe und auf der Basis der Abwassermenge in dem Abwassertank von dem ersten vorbestimmten Pegel zu dem zweiten vorbestimmten Pegel.

3. Vakuumpumpensteuervorrichtung gemäß Anspruch 1, wobei die Gas-Flüssigkeits-Verhältnis-Detektiermittel das Gas-Flüssigkeits-Verhältnis bestimmen, und zwar sowohl auf der Basis der Gesamtverdrängung der Vakuumpumpe erhalten aus der kumulativen Betriebszeit innerhalb einer bestimmten Zeitperiode und der Evakuierungskapazität der Vakuumpumpe als auch auf der Basis der gesamt herausgepumpten Menge erhalten aus der kumulativen Betriebszeit innerhalb der bestimmten Zeitperiode und der Herauspumpkapazität der Druckerhöhungs oder Booster-Pumpe.

4. Vakuumpumpensteuervorrichtung gemäß Anspruch 2, wobei die Gas-Flüssigkeits-Verhältnis-Detektiermittel einen kumulativen Zeitnehmer umfassen zum Messen einer kumulativen Betriebszeit der Vakuumpumpe.

5. Vakuumpumpensteuervorrichtung gemäß Anspruch 4, wobei die Steuermittel einen Komparator umfassen zum Vergleichen der kumulativen Betriebszeit der Vakuumpumpe mit einer Bezugszeit und Ausgeben eines Signals um den Betrieb der Vakuumpumpe zu starten, wenn die kumulative Betriebszeit geringer ist als die Bezugszeit.

6. Vakuumpumpensteuervorrichtung gemäß Anspruch 5, wobei die Steuermittel einen Zeitnehmer umfassen, um die Betriebszeit der Vakuumpumpe auf einen vorbestimmten Wert zu begrenzen.

7. Vakuumpumpensteuervorrichtung gemäß Anspruch 3, wobei die Gas-Flüssigkeits-Verhältnis-Detektiermittel einen kumulativen Zeitnehmer umfassen, und zwar zum Messen einer kumulativen Betriebszeit der Vakuumpumpe.

8. Vakuumpumpensteuervorrichtung gemäß Anspruch 7, wobei die Steuermittel einen Komparator umfassen zum Vergleichen der kumulativen Betriebszeit der Vakuumpumpe mit einer Bezugszeit und Ausgeben eines Signals zum Starten des Betriebs der Vakuumpumpe, wenn die kumulative Betriebszeit geringer ist als die Bezugszeit.

9. Vakuumpumpensteuervorrichtung gemäß Anspruch 8, wobei die Steuermittel einen Zeitnehmer umfassen, um die Betriebsdauer der Vakuumpumpe auf einen vorbestimmten Wert zu begrenzen.

10. Vakuumpumpensteuervorrichtung gemäß Anspruch 6, die weiterhin folgendes aufweist:
einen Niedrigwasserpegelsensor und einen Hochwasserpegelsensor vorgesehen an dem Wassersammeltank zum Detektieren des vorbestimmten Pegels bzw. einem weiteren vorbestimmten Pegel des Abwassers in den Wassersammeltank, und Liefern dieser Pegel an die Steuermittel, wobei die Steuermittel wirken zum Stoppen der Vakuumpumpe, wenn der andere vorbestimmte Pegel detektiert wird von dem Hochwasserpegelsensor.

11. Vakuumpumpensteuervorrichtung gemäß Anspruch 10, die weiterhin folgendes aufweist:
einen Drucksensor zum Fühlen des Luftdrucks in dem Wassersammeltank, eine Verarbeitungsschaltung, die mit dem Drucksensor verbunden ist und ein Signal an die Steuermittel ausgibt, wenn der Druck innerhalb des Wassersammeltanks sich über einen ersten vorbestimmten Wert erhöht hat, um dadurch den Betrieb der Vakuumpumpe zu starten.

12. Vakuumpumpensteuervorrichtung gemäß Anspruch 11, wobei der erste vorbestimmte Wert bei -5000 Pa (-5mAq) liegt.

13. Vakuumpumpensteuervorrichtung gemäß Anspruch 11, wobei die Verarbeitungsschaltung ein Signal an die Steuermittel abgibt, wenn der Druck innerhalb des Wassersammeltanks unter einen zweiten vorbestimmten Wert gefallen ist, der unter dem ersten vorbestimmten Wert liegt, wobei die Steuermittel zum Stoppen der Vakuumpumpe wirken, wenn der Druck innerhalb des Wassersammeltanks unter den zweiten vorbestimmten Wert gefallen ist, und wenn die kumulative Betriebszeit der Vakuumpumpe länger ist als die Bezugszeit.

14. Vakuumpumpensteuervorrichtung gemäß Anspruch 13, wobei der zweite vorbestimmte Wert bei -7000 Pa (-7 mAq) liegt.

## Revendications

1. Appareil de commande de pompe à vide destiné à un système collecteur d'eaux usées du type à évacuation dans lequel les eaux usées évacuées d'habitations et d'installations (30) sont collectées dans un réservoir (1) collecteur d'eaux par des tuyaux (35) d'égout sous vide qui sont mis en dépression, et dans lequel les eaux usées collectées dans le réservoir (1) sont évacuées par une pompe de surpression (3) alors que l'air du réservoir collecteur (1) est évacué par une pompe à vide (2), caractérisé en ce que
l'appareil de commande de pompe à vide comporte
un dispositif de détection du rapport gaz-liquide qui détecte le rapport de la quantité d'air à la quantité des eaux usées collectées dans le réservoir collecteur d'eaux, et
un dispositif de commande du temps de fonctionnement de la pompe à vide d'après le rapport gaz-liquide détecté par le dispositif de détection afin que la valeur cible du rapport gaz-liquide soit obtenue à nouveau lorsqu'elle tombe au-dessous de la valeur cible.

2. Appareil de commande de pompe à vide selon la revendication 1, dans lequel le dispositif de détection du rapport gaz-liquide mesure le temps cumulé de fonctionnement de la pompe à vide pendant la période au cours de laquelle le niveau des eaux usées dans le réservoir s'élève d'un niveau prédéterminé à un autre niveau prédéterminé, et détermine le rapport gaz-liquide en fonction du déplacement total de la pompe à vide obtenu à partir du temps cumulé de fonctionnement et de la capacité d'évacuation de la pompe à vide, et en fonction de la quantité des eaux usées présente dans le réservoir entre le premier niveau prédéterminé et le second niveau prédéterminé.

3. Appareil de commande de pompe à vide selon la revendication 1, dans lequel le dispositif de détection du rapport gaz-liquide détermine le rapport gaz-liquide à la fois d'après le déplacement total de la pompe à vide, obtenu à partir du temps cumulé de fonctionnement pendant une certaine période, et de la capacité d'évacuation de la pompe à vide, et en fonction de la quantité totale pompée, obtenue à partir du temps cumulé de fonctionnement pendant la certaine période et de la capacité de pompage de la pompe de surpression.

4. Appareil de commande de pompe à vide selon la revendication 2, dans lequel le dispositif de détection du rapport gaz-liquide comprend une minuterie destinée à mesurer le temps cumulé de fonctionnement de la pompe à vide.

5. Appareil de commande de pompe à vide selon la revendication 4, dans lequel le dispositif de commande comporte un comparateur destiné à comparer le temps cumulé de fonctionnement de la pompe à vide à un temps de référence et à transmettre un signal provoquant le fonctionnement de la pompe à vide lorsque le temps cumulé de fonctionnement est inférieur au temps de référence.

6. Appareil de commande de pompe à vide selon la revendication 5, dans lequel le dispositif de commande comporte une minuterie destinée à limiter le temps de fonctionnement de la pompe à vide à une valeur prédéterminée.

7. Appareil de commande de pompe à vide selon la revendication 3, dans lequel le dispositif de détection du rapport gaz-liquide comporte une minuterie destinée à mesurer le temps cumulé de fonctionnement de la pompe à vide.

8. Appareil de commande de pompe à vide selon la revendication 7, dans lequel le dispositif de commande comporte un comparateur destiné à comparer le temps cumulé de fonctionnement de la pompe à vide à un temps de référence et à transmettre un signal provoquant le fonctionnement de la pompe à vide lorsque le temps cumulé de fonctionnement est inférieur au temps de référence.

9. Appareil de commande de pompe à vide selon la revendication 8, dans lequel le dispositif de commande comporte une minuterie destinée à limiter la durée de fonctionnement de la pompe à vide à une valeur déterminée.

10. Appareil de commande de pompe à vide selon la revendication 6, comprenant en outre un capteur d'un faible niveau d'eau et un capteur d'un niveau élevé d'eau, placés sur le réservoir collecteur d'eaux et destinés à détecter le niveau prédéterminé et un autre niveau prédéterminé des eaux usées dans le réservoir collecteur d'eaux respectivement, et à les transmettre au dispositif de commande, ce dernier assurant l'arrêt du fonctionnement de la pompe à vide lorsque l'autre niveau prédéterminé est détecté par le capteur d'un niveau élevé de l'eau.

11. Appareil de commande de pompe à vide selon la revendication 10, comprenant en outre un capteur de pression destiné à détecter la pression de l'air dans le réservoir collecteur d'eaux, et un circuit de traitement connecté au capteur de pression et qui transmet un signal au dispositif de commande lorsque la pression dans le réservoir collecteur dépasse une première valeur prédéterminée afin que la pompe à vide commence à fonctionner.

12. Appareil de commande de pompe à vide selon la revendication 11, dans lequel la première valeur prédéterminée est égale à -5000 Pa (-5 mAq).

13. Appareil de commande de pompe à vide selon la revendication 11, dans lequel le circuit de traitement transmet un signal au dispositif de commande lorsque la pression dans le réservoir collecteur d'eaux est tombée au-dessous de la seconde valeur prédéterminée qui est inférieure à la première valeur prédéterminée, le dispositif de commande provoquant l'arrêt de la pompe à vide lorsque la pression dans le réservoir collecteur est tombée au-dessous de la seconde valeur prédéterminée et lorsque le temps cumulé de fonctionnement de la pompe à vide dépasse le temps de référence.

14. Appareil de commande de pompe à vide selon la revendication 13, dans lequel la seconde valeur prédéterminée est égale à -7000 Pa (-7 mAq).
